# EUROPÄISCHE PATENTSCHRIFT

(11) **EP 1 438 243 B1**
(45) Veröffentlichungstag und Bekanntmachung des Hinweises auf die Patenterteilung: **03.05.2006**
(21) Anmeldenummer: 02782954.8
(22) Anmeldetag: 18.10.2002
(51) Int. Cl.: B65G 1/14

(54) **STAPELSÄULE**
STACKING COLUMN
COLONNE D'EMPILAGE

(30) Priorität: 25.10.2001 DE 10152046
(43) Veröffentlichungstag der Anmeldung: 21.07.2004
(73) Patentinhaber: MTS Maschinenbau GmbH, 88512 Mengen (DE)
(72) Erfinder: STROBEL, Gustav, 88348 Bad Saulgau (DE)
(74) Vertreter: Weiss, Peter
(86) Internationale Anmeldenummer: PCT/EP2002/011701
(87) Internationale Veröffentlichungsnummer: WO 2003/035517

(56) Entgegenhaltungen:
- DE-A- 10 000 371
- DE-A- 19 641 270
- DE-U- 9 408 344
- DE-U- 20 005 710

## Beschreibung

Stapelsäule zum Lagern von Lagergütern über- oder nebeneinander auf Klinken, welche um eine orstfeste Drehachse von einer Ruhestellung in eine Arbeitsstellung drehen und eine Auflagefläche einerseits sowie eine Klinkenhalterung andererseits der Drehachse aufweisen, wobei die jeweiligen nachfolgenden Klinken miteinander über wenigstens eine Mitnehmerlasche gekoppelt sind und jede Mitnehmerlasche eine Bohrung und ein Langloch aufweist.

Derartige Stapelsäulen sind in vielfältiger Form und Ausführung im Markt bekannt und erhältlich. Beispielsweise ist eine Stapelsäule zum Lagern von Lagergütern der eingangs genannten Art in der DE 196 47 578.3 aufgezeigt und beschrieben.

Dort sind ebenfalls einzelne Klinken drehbar zueinander beabstandet und übereinander angeordnet, wobei eine Dreh- und Schwenkbewegung der einzelnen Klinken miteinander über Mitnehmerlaschen gekoppelt ist, um eine Zurückbewegung einzelner Klinken, insbesondere ausgefahrener Klinken zu ermöglichen.

Nachteilig gegenüber der dort beschriebenen Stapelsäule ist, dass eine Reduktion der Teilung, d.h., ein Abstand zweier Klinken zueinander nicht ohne-weiteres möglich ist, so dass sich die Klinkengewichte der einzelnen Klinken sowie einzelne Mitnehmerlaschen behindern. Insbesondere für flächige dünne Bauteile ist es von Vorteil, dass wesentlich mehr Bauteile in derartige Stapelsäulen aufgenommen werden können. Hierzu muss die Teilung erheblich reduziert werden.

Wird eine Teilung reduziert, berühren sich beispielsweise die Gegengewichte, so dass sich die einzelnen Klinken nicht mitbewegen lassen.

Je kleiner die Teilung ist, desto geringer ist ein Abstand zwischen einer Bohrung und einem Langloch der Mitnehmerlasche, so dass nur eine ganz bestimmte Teilung erreicht werden kann.

Eine andere Form von Stapelsäulen verzichtet auf Gegengewichte, wobei anstelle von Gegengewichten Federn vorgesehen sind, die die einzelnen Klinken zurückstellen. Eine derartige Lösung ist kostenintensiv und problematisch, was insbesondere die Federkräfte betrifft. Derartige Federn sind anfällig und bewegen leicht die Lagergüter aus dem Klinkenbereich, was ebenfalls unerwünscht ist. Diese sind nicht selbsthemmend.

Die DE 100 00 371 A1 beschreibt ein Rastersystem zur stehenden Aufnahme von Teilen, bei welchen die einzelnen Klinken bzw. Haken zur Aufnahme von Cegenständen über geradlinige starre Steuerhebel mit Langlöchern miteinander verbunden sind.

Die DE 94 08 344.4 offenbart einen Kniehebel für eine Stapelsäule zum Lagern von Lagergütern, insbesondere von Charosserieteilen mit einem einer Drehachse zugeordneten Tagarm, wobei an dem Tragarm ein Streifen zum Halten des Charosserletelles festgelegt ist.

Die DE 200 05 710 U1 offenbart einen Klinkenhebel für Stapelsäulen mit einem Gegengewicht, welches direkt aus dem Hebel selbst gebildet ist.

Die DE 196 41 270 A1 beschreibt eine Vorrichtung zum Stapeln und Transportieren von Formteilen, wobei die einzelnen Klinken mit Drehachsen und Zapfclomanten ausgebildet sind, die in jeweilige Langlöcher eines Seitenteiles eingreifen.

Der vorliegenden Erfindung liegt die Aufgabe zugrunde, eine Stapelsäule der eingangs genannten Art zu schaffen, welche die o.g. Nachteile beseitigt und mit welcher auf einfache, kostengünstige und effektive Weise eine Teilung zweier nebeneinander und/oder übereinander liegender Klinken reduzierbar ist. Dabei soll eine Selbsthemmung von in einer Arbeitsstellung herausgefahrenen Klinken möglich sein. Zudem soll eine derartige Stapelsäule äusserst kostengünstig hergestellt, betriebssicher und langlebig zu betreiben sein.

Zur Lösung dieser Aufgabe führen die Merkmale des kennzeichnenden Teils des Anspruches 1.

Die Funktionsweise von Stapelsäulen ist ausführlich in der DE 196 47 578.3 beschrieben. Auf diese wird hier ausdrücklich Bezug genommen und daher wird auf eine nähere Beschreibung der Funktionsweise verzichtet.

Bei der vorliegenden Erfindung ist eine Stapelsäule zum Lagern von Lagergütern, wie beispielsweise Blechen, Motorhauben, Kotflügel od. dgl. aufgezeigt, bei welcher sich als besonders vorteilhaft erwiesen hat, eine Mitnehmerlasche, welcher eine Bohrung sowie ein Langloch aufweist, gekröpft oder bogenartig bzw. abgewinkelt auszubilden.

Hierdurch wird gewährleistet, dass eine Teilung zweier benachbarter Klinken derart reduzierbar ist, da insbesondere ein endseitiger Bereich der Mitnehmerlasche, in welchen das Langloch vorgesehen ist, aus einem Wirkbereich einer darüberliegenden Klinke herausbewegbar ist. Hierdurch lassen sich nicht nur die Gewichte der einzelnen Klinken, was deren Grösse betrifft, reduzieren, sondern es lässt sich auch die Teilung wesentlich verringern, so dass wesentlich mehr Bleche in eine Stapelsäule bzw. wesentlich mehr Klinken in der Stapelsäule untergebracht werden können.

Es hat sich ferner als vorteilhaft erwiesen, die Gegengewichte in und/oder neben einer Klinkenhalterung auf einer Gewichtsachse zu lagern, wobei auch im Rahmen der vorliegenden Erfindung liegen soll, eine Mehrzahl von Gegengewichte darauf zu lagern, um insgesamt deren Durchmesser bzw. Baugrösse zu reduzieren. Hierdurch kann ebenfalls eine Teilung einzelner übereinander oder nebeneinander liegenden Klinken reduziert werden.

Damit auch die Gegengewichte von Durchmesser und ggf. Anzahl reduziert werden können, hat sich als vorteilhaft erwiesen, eine Auflagefläche mit Durchbrüchen und/oder Ausnehmungen zu versehen. Auch hierdurch lässt sich das erforderliche Gegengewicht bzw. die erforderlichen Gegengewichte reduzieren, was deren Baugrösse, Durchmesser etc. betrifft. Dies trägt ebenfalls dazu bei, dass eine Teilung von benachbarten Klinken wesentlich reduziert werden kann.

Es hat sich ferner als vorteilhaft bei der vorliegenden Erfindung erwiesen, in die Seitenwände der Klinkenhalterung, insbesondere in einer Aussenkante eine Anschlagsausnehmung vorzusehen, welche mit einem Anschlag in einer waagrechten Arbeitsposition zusammenwirkt. Durch die Anschlagsausnehmung lässt sich ebenfalls die Teilung benachbarter Klinken reduzieren.

Im Rahmen der vorliegenden Erfindung soll ferner liegen, dass die Mitnehmerlasche, insbesondere im Bereich des Langloches bogenartig, abgewinkelt, gekröpft ausgebildet sein kann. Hierauf sei die Erfindung nicht beschränkt. Beispielsweise kann die gesamte Mitnehmerlasche auch bananen- oder bogenartig gewölbt ausgebildet sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht auf eine erfindungsgemässe Stapelsäule;
Figuren 2a und 2b jeweils eine Draufsicht und eine Seitenansicht auf eine erfindungsgemässe Mitnehmerlasche;
Figuren 3a bis 3d verschiedene Ansichten einer erfindungsgemässen Klinke zum Einsetzen in eine Stapelsäule;
Figuren 4a bis 4d verschiedene Ansichten eines weiteren Ausführungsbeispiels einer weiteren Klinke;
Figuren 5a bis 5d verschiedene Ansichten einer Klinkenhalterung.

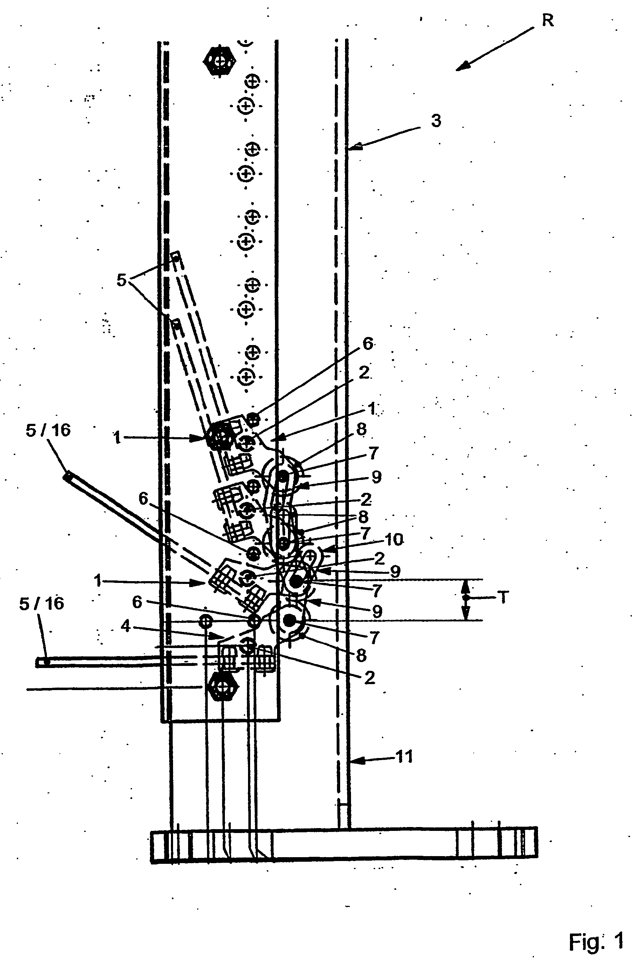

Gemäss Figur 1 weist eine erfindungsgemässe Stapelsäule R eine Mehrzahl von über- oder nebeneinander angeordneten Klinken 1 auf, welche über Drehachsen 2 in einem vorzugswiese U-artig ausgebildeten Gehäuse 3 verschwenkbar sind, wobei eine Klinkenhalterung 4 in einer waagrechten Arbeitsstellung einer Auflagefläche 5/16 über ein im Gehäuse 3 angeordneten Anschlag 6 gehalten ist. Die einzelnen übereinander angeordneten Klinken 1 bzw. Klinkenhalterungen 4 sind ferner jeweils mit Gewichtsachsen 7 versehen, auf welchen zumindest ein Gegengewicht 8 aufsitzt.

Wichtig bei der vorliegenden Erfindung ist, dass die einzelnen Klinken 1, insbeosondere die über- bzw. nebeneinander liegenden Klinken zwischen den jeweiligen Gewichtsachsen 6 über zumindest eine Mitnehmerlasche 9 gekoppelt sind.

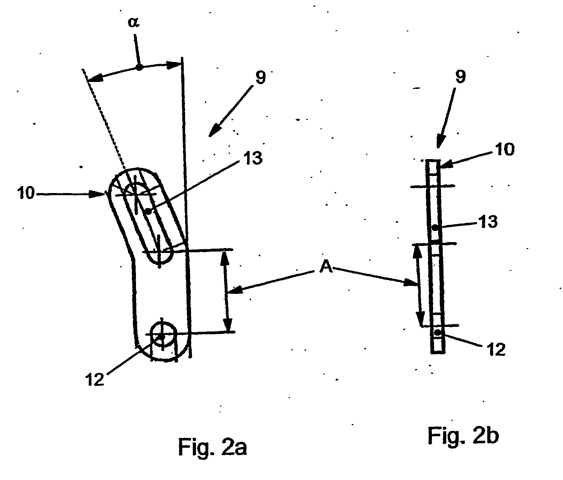

Dabei hat sich als besonders vorteilhaft bei der vorliegenden Erfindung erwiesen, die Mitnehmerlasche 9, wie es in Figur 1 angedeutet und in den Figuren 2a und 2b vergrössert aufgezeigt ist, diese gekröpft, gewölbt, oder abgewinkelt auszubilden. Hierdurch wird ein Bereich 10 der Mitnehmerlasche 9 aus einem Schwenk- bzw. Wirkbereich des darüberliegenden Gegengewichtes 8 einer darüberliegenden Klinke 1 herausbewegt, insbesondere dann, wenn die Mitnehmerlasche 9, insbesondere deren Bereich 10 zu einer Rückseite 11 des Gehäuses 3 hin ausgerichtet ist. Diese wird aus dem Wirkbereich des darüberliegenden Gegengewichtes 8 herausbewegt bzw. verschwenkt. In Figur 2a und 2b ist eine Mitnehmerlasche 9 aufgezeigt, welche einends eine Bohrung 12 und in einem Abstand A ein Langloch 13 anschliesst, welches in einem endseitigen Bereich 10 endet. Dabei schliesst das Langloch 13 einen vorzugsweise spitzen Winkel α zum Grundelement der Mitnehmerlasche 9 ein.

Ab einem bestimmten Abstand A ein; der geringer oder grösser ausfallen kann, soll auch im Rahmen der vorliegenden Erfindung liegen das Langloch 13 beispielsweise bogenartig stärker oder schwächer abzukröpfen bzw. winkelig auszubilden. Dies ist wichtig bei der vorliegenden Erfindung, da hierdurch der endseitige Bereich 10 aus dem Wirkbereich der darüberliegenden Klinke 1 herausbewegt wird. Hierdurch lässt sich eine Teilung T wesentlich reduzieren. Eine Teilung T ist ein Abstand zweier benachbarter Klinken. Hierdurch kann eine Teilung T von kleiner als 30 mm als Abstand zweier Klinken 1 bzw. zweier benachbarter Auflageflächen 5 in einer Arbeitsstellung realisiert werden.

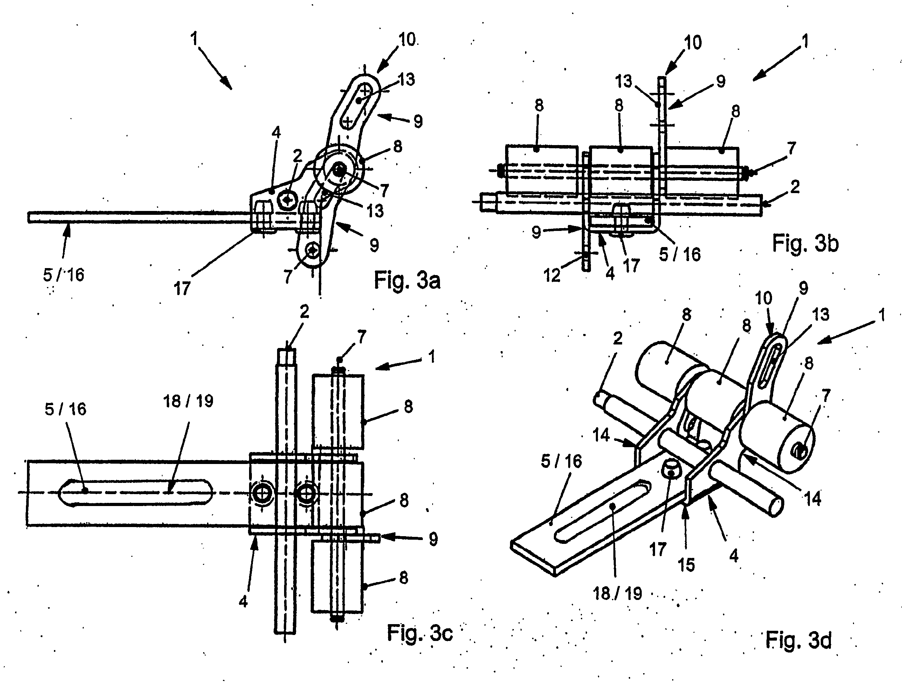

In cem Ausführungsbeispiel gemäss Figur 3d ist eine Klinke 1 aufgezeigt, bei welcher eine etwa U-artig ausgebildete Klinkenhalterung 4 vorgesehen ist. Durch deren Seitenwände 14 greift die Drehachse 2. In eine Grundfläche 15 der Klinkenhalterung 4 (siehe auch Figur 3d) eine Auflagefläche 5/16 eingesetzt und mit dieser fest über zumindest ein Befestigungselement 17 verbunden ist.

Damit die Grösse und/oder Anzahl der Gegengewichte 8, welche auf der Gewichtsachse 7 sitzen, reduziert werden kann, und gleichzeitig eine grosse bzw. eine breite Auflagefläche 16 gewährleistet bleibt, hat sich ferner bei der vorliegenden Erfindung als vorteilhaft erwiesen, in die Auflagefläche 16 zumindest eine Ausnehmung 18 und/oder zumindest einen Durchbruch 19 vorzusehen. Hierdurch wird die Tragkraft der Auflagefläche 16 nicht beeinflusst aber deren Gewicht erheblich reduziert, was eine Reduktion der Gegengewichte 8 ermöglicht. Sind die Gegengewichte 8 kleiner ausgebildet, so lässt sich auch eine Teilung, d.h. ein Abstand zweier übereinander angeordneter Klinken 1 reduzieren.

Wie insbesondere aus Figuren 3b und 3b hervorgeht, greift in das Langloch 13 einer unteren Mitnehmerlasche 9 die Gewichtsachse 7 der darüberliegenden Klinke 1 ein, wobei auf der gleichen oder auf der gegenüberliegenden Seite der Klinkenhalterung 4, wie es in Figur 3b dargestellt ist, die nächste Mitnehmerlasche 9 in oben beschriebener Weise für die hier nicht dargestellte darüberliegende Klinke 1 anschliesst, wobei die Mitnehmerlasche 9 entgegen der Richtung der Auflage 16 bogenartig, winklig oder gekröpft ist.

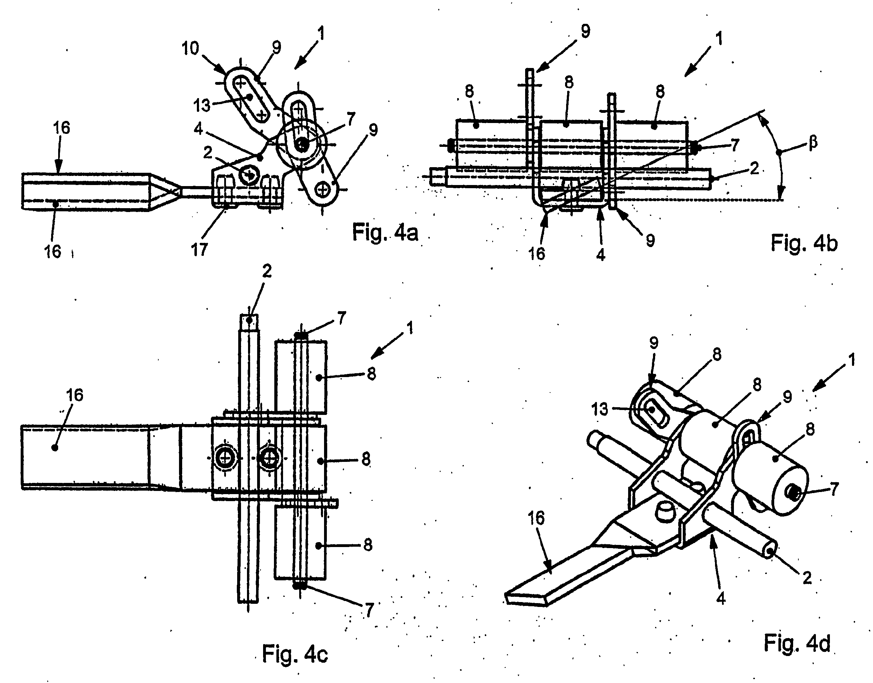

Wie insbesondere aus den Figuren 4a bis 4d hervorgeht, ist eine weitere Klinke 1 beschrieben, die in etwa der oben beschriebenen Art entspricht. Unterschiedlich ist, dass deren Auflagefläche 16, wie es insbesondere in den Figuren 4a und 4b angedeutet ist, um einen Winkel β geneigt ist. Dabei kann die Neigung der Auflagefläche 16 um den Winkel β positiv oder negativ erfolgen. Hierauf sei die Erfindung nicht beschränken. Im übrigen besteht die Klinke 1 aus den oben beschriebenen Bauteilen.

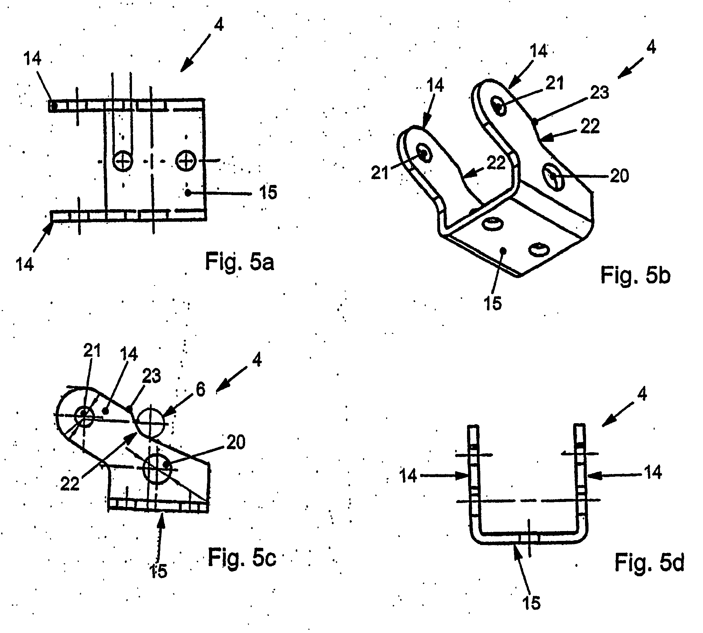

In den Figuren 5a bis 5b ist u.a. als perspektivische Ansicht die Klinkenhalterung 4 aufgezeigt, welche aus der Grundfläche 15 und daran jeweils anschliessenden Seitenwänden 14 gebildet ist, wobei fluchtende Durchgangsbohrungen 20, 21 zur Aufnahme von Drehachse 2 und Gewichtsachse 7 Fluchten 7 vorgesehen sind.

Es hat sich ferner als besonders vorteilhaft erwiesen, für einen Anschlag 6, wie er auch in den Figuren 1 und 5c angedeutet ist, eine Anschlagsausnehmung 22 in eine Aussenkante 23 der Seitenwände 14 vorzusehen, die in etwa der Kontur des Anschlages 6 entspricht. Hierduch erfolgt ein Anschlag in einer waagrechten Gebrauchslage der Klinke wesentlich präzsiser, wodurch ebenfalls eine Teilung T bzw. ein Gesamtabstand zweier benachbarter Klinken 1 reduzierbar ist.

### Positionszahlenliste

| | | | | | |
|---|---|---|---|---|---|
| 1 | Klinke | 34 | | 67 | |
| 2 | Drehachse | 35 | | 68 | |
| 3 | Gehäuse | 36 | | 69 | |
| 4 | Klinkenhalterung | 37 | | 70 | |
| 5 | Auflagefläche | 38 | | 71 | |
| 6 | Anschlag | 39 | | 72 | |
| 7 | Gewichtsachsen | 40 | | 73 | |
| 8 | Gegengewicht | 41 | | 74 | |
| 9 | Mitnehmerlasche | 42 | | 75 | |
| 10 | Bereich | 43 | | 76 | |
| 11 | Rückseite | 44 | | 77 | |
| 12 | Bohrung | 45 | | 78 | |
| 13 | Langloch | 46 | | 79 | |
| 14 | Seitenwand | 47 | | | |
| 15 | Grundfläche | 48 | | | |
| 16 | Auflagefläche | 49 | | R | Stapelsäule |
| 17 | Befestigungselement | 50 | | | |
| 18 | Ausnehmung | 51 | | | |
| 19 | Durchbruch | 52 | | A | Abstand |
| 20 | Durchgangsbohrung | 53 | | α | Winkel |
| 21 | Durchgangsbohrung | 54 | | β | Winkel |
| 22 | Anschlagsausnehmung | 55 | | T | Teilung |
| 23 | Aussenkante | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Stapelsäule zum Lagern von Lagergütern über- oder nebeneinander auf Klinken (1), welche um eine orstfeste Drehachse (2) von einer Ruhestellung in eine Arbeitsstellung drehen und eine Auflagefläche (5/16) einerseits sowie eine Klinkenhalterung (4) andererseits der Drehachse (2) aufweisen, wobei die jeweiligen nachfolgenden Klinken (1) miteinander über wenigstens eine Mitnehmerlasche (9) gekoppelt sind und jede Mitnehmerlasche (9) eine Bohrung (12) und ein Langloch (13) aufweist,
**dadurch gekennzeichnet,**
**dass** an zumindest einer Gewichtsachse (7) zumindest zwei Mitnehmerlaschen (9) angeordnet sind, wobei die Gewichtsachse (7) die Bohrung (12) der einen und das Langloch (13) der anderen Mitnehmerlasche (9) durchsetzt.

2. Stapelsäule nach Anspruch 1, **dadurch gekennzeichnet, dass** die Mitnehmerlasche (9) in einem Bereich (10) des Langloches (13) abgewinkelt, gekröpft oder bogenartig ausgebildet ist.

3. Stapelsäule nach Anspruch 1 oder 2, **dadurch gekennzeichnet, dass** zumindest ein Gegengewicht (8) auf der Gewichtsachse (7) angeordnet ist.

4. Stapelsäule nach einem der Ansprüche 1 bis 3, **dadurch gekennzeichnet, dass** die Mitnehmerlasche (9) einends die Bohrung (12) und andernends das Langloch (13) aufweist, wobei in die Bohrung (12) die Gewichtsachse (7) eingreift.

5. Stapelsäule nach wenigstens einem der Ansprüche 1 bis 4, **dadurch gekennzeichnet, dass** das Langloch (13) in einem Abstand (A) zur Bohrung (12) angeordnet und die Mitnehmerlasche (9) vollständig oder ab dem Langloch (13) bogenartig, abgewinkelt oder abgekröpft ausgebildet ist.

6. Stapelsäule nach einem der Ansprüche 2 bis 5, **dadurch gekennzeichnet, dass** ein abgewinkelter, gekröpfter oder bogenartig ausgebildeter Bereich (10) der Mitnehmerlasche (9) zu einer Rückseite (11) des Gehäuses (3) hin gewölbt, gekröpft oder bogenartig ausgerichtet ist.

7. Stapelsäule nach wenigstens einem der Ansprüche 2 bis 6, **dadurch gekennzeichnet, dass** die Mitnehmerlasche (9) querschnittlich streifenartig ausgebildet ist, wobei der Bereich (10) des Langloches (13) in einer Arbeitsstellung durch die gekröpfte, abgewinkelte oder bogenartige Form aus einem Wirkbereich einer darüberliegenden nächsten Klinke (1) herausbewegbar ist.

8. Stapelsäule nach wenigstens einem der Ansprüche 1 bis 7, **dadurch gekennzeichnet, dass** die Klinke (1) eine U-artig ausgebildete Klinkenhalterung (4) aufweist, welche von der Drehachse (2) und zu dieser parallel beabstandet von der Gewichtsachse (7) durchgriffen ist.

9. Stapelsäule nach wenigstens einem der Ansprüch 1 bis 8, **dadurch gekennzeichnet, dass** die Klinkenhalterung (4) Seitenwände (14) aufweist, durch welche die Gewichtsachse (7) und die Drehachse (2) greifen, wobei jede Seitenwand (14) mit einer Anschlagsausnehmung (22) versehen ist.

10. Stapelsäule nach wenigstens einem der Ansprüche 1 bis 9, **dadurch gekennzeichnet, dass** die Auflagefläche (5) winkelig gegenüber einer Grundfläche (15) eines Klinkenhalters (4) ausgebildet ist.

11. Stapelsäule nach einem der Ansprüche 1 bis 10, **dadurch gekennzeichnet, dass** zur Reduktion des Gegengewichtes (8) eine Auflagefläche (5/16) der Klinke zumindest teilweise mit Ausnehmungen (18) oder Durchbrüchen (19) versehen ist.

## Claims

1. Stacking column for storing stock items one above or alongside the other on pawls (1), which rotate about a stationary hinge pin (2) from a normal position into a working position and have a supporting surface (5/16) at one side as well as a pawl support (4) at the other side of the hinge pin (2), wherein the respective successive pawls (1) are coupled to one another by at least one link plate (9) and each link plate (9) has a bore (12) and an oblong hole (13),
**characterized in**
**that** on at least one weight axle (7) at least two link plates (9) are disposed, wherein the weight axle (7) penetrates the bore (12) of the one and the oblong hole (13) of the other link plate (9).

2. Stacking column according to claim 1, **characterized in that** the link plate (9) in a region (10) of the oblong hole (13) is of an angular, elbowed or arcuate design.

3. Stacking column according to claim 1 or 2, **characterized in that** at least one counterweight (8) is disposed on the weight axle (7).

4. Stacking column according to one of claims 1 to 3, **characterized in that** the link plate (9) has the bore (12) at one end and the oblong hole (13) at the other end, wherein the weight axle (7) engages into the bore (12).

5. Stacking column according to at least one of claims 1 to 4, **characterized in that** the oblong hole (13) is disposed at a distance (A) from the bore (12) and the link plate (9) is designed entirely, or from the oblong hole (13) onwards, in an arcuate, angular or elbowed manner.

6. Stacking column according to one of claims 2 to 5, **characterized in that** an angular, elbowed or arcuate region (10) of the link plate (9) is aligned in a curved, elbowed or arcuate manner in the direction of a rear side (11) of the housing (3).

7. Stacking column according to at least one of claims 2 to 6, **characterized in that** the link plate (9) in cross section is of a strip-like design, wherein the region (10) of the oblong hole (13) in a working position is movable by virtue of the elbowed, angular or arcuate shape out of an effective range of a next pawl (1) situated above it.

8. Stacking column according to at least one of claims 1 to 7, **characterized in that** the pawl (1) has a pawl support (4) of a U-like design, which is penetrated by the hinge pin (2) and, parallel thereto and at a distance therefrom, by the weight axle (7).

9. Stacking column according to at least one of claims 1 to 8, **characterized in that** the pawl support (4) has side walls (14), through which the weight axle (7) and the hinge pin (2) engage, wherein each side wall (14) is provided with a stop recess (22).

10. Stacking column according to at least one of claims 1 to 9, **characterized in that** the supporting surface (5) is of an angular design relative to a base (15) of a pawl support (4).

11. Stacking column according to one of claims 1 to 10, **characterized in that**, to reduce the counterweight (8), a supporting surface (5/16) of the pawl is provided at least partially with recesses (18) or through-holes (19).

## Revendications

1. Colonne d'empilement pour le stockage de produits l'un sur ou à côté de l'autre sur des poignées (1) qui tournent autour d'un axe de rotation stationnaire (2) d'une position de repos en une position de travail et qui présentent une surface d'appui (5/16) d'un côté ainsi qu'un support de poignée (4) de l'autre côté de l'axe de rotation (2), les poignées successives respectives (1) étant couplées l'une à l'autre par l'intermédiaire d'au moins une languette d'entraînement (9) et chaque languette d'entraînement (9) présentant un alésage (12) et un trou oblong (13),
**caractérisée par le fait**
**que** sur au moins un axe de poids (7) sont disposées au moins deux languettes d'entraînement (9), l'axe de poids (7) traversant l'alésage (12) de l'une et le trou oblong (13) de l'autre languette d'entraînement (3).

2. Colonne d'empilement selon la revendication 1, **caractérisée par le fait que** la languette d'entraînement (9) est réalisée coudée, courbée ou en forme d'arc dans une zone (10) du trou oblong (13).

3. Colonne d'empilement selon la revendication 1 ou 2, **caractérisée par le fait qu'**au moins un contrepoids (8.) est disposé sur l'axe de poids (7).

4. Colonne d'empilement selon la revendication 1 à 3, **caractérisée par le fait que** la languette d'entraînement (9) présente, à une extrémité, l'alésage (12) et, à l'autre extrémité, le trou oblong (13), dans l'alésage (12) pénétrant l'axe de poids (7).

5. Colonne d'empilage selon au moins l'une des revendications 1 à 4, **caractérisée par le fait que** le trou oblong (13) est disposé à une distance (A) de l'alésage (12) et que la languette d'entraînement (9) est réalisée entièrement, ou à partir du trou oblong (13), en forme d'arc, coudée ou courbée.

6. Colonne d'empilage selon l'une des revendications 2 à 5, **caractérisée par le fait qu'**une zone réalisée coudée, courbée ou en forme d'arc (10) de la languette d'entraînement (9) est orientée bombée, coudée ou en forme d'arc vers une face arrière (11) du boîtier (3).

7. Colonne d'empilage selon au moins l'une des revendications 2 à 6, **caractérisée par le fait que** la languette d'entraînement (5) est réalisée de section en forme de bande, la zone (10) du trou oblong (13) pouvant être sortie, en position de travail, par la forme recourbée, coudée ou en arc, d'une zone active d'une poignée (1) suivante située au-dessus.

8. Colonne d'empilage selon au moins l'une des revendications 1 à 7, **caractérisée par le fait que** la poignée (1) présente un support de poignée (4) réalisé en forme de "U" qui est traversé par l'axe de rotation (2) et, à une distance de ce dernier, par l'axe de poids (7).

9. Colonne d'empilage selon au moins l'une des revendications 1 à 8, **caractérisée par le fait que** le support de poignée (4) présente des parois latérales (14) à travers lesquelles s'engagent l'axe de poids (7) et l'axe de rotation (2), chaque paroi latérale (14) étant pourvue d'un évidement de butée (22).

10. Colonne d'empilage selon au moins l'une des revendications 1 à 9, **caractérisée par le fait que** la surface d'appui (5) est réalisée à angle par rapport à une surface de base (15) d'un support de poignée (4).

11. Colonne d'empilage selon au moins l'une des revendications 1 à 10, **caractérisée par le fait que**, pour réduire le contrepoids (8), une surface d'appui (5/16) de la poignée est pourvue au moins partiellement d'évidements (18) ou de passages (19).
